# EUROPÄISCHE PATENTSCHRIFT

(11) **EP 2 428 384 B1**
(45) Veröffentlichungstag und Bekanntmachung des Hinweises auf die Patenterteilung: **24.05.2017**
(21) Anmeldenummer: 11173706.0
(22) Anmeldetag: 12.07.2011
(51) Int. Cl.: B60K 6/46, B60K 17/28, B60K 25/06, B60K 6/44, F16H 3/091

(54) **Antriebsstrang für Fahrzeuge mit Zapfwellen für den Antrieb von Zusatzgeräten**
Power train for vehicles with power take-off shafts for driving additional devices
Faisceau d'entraînement pour véhicules dotés de prises de force pour l'entraînement d'appareils complémentaires

(30) Priorität: 10.09.2010 AT 15092010
(43) Veröffentlichungstag der Anmeldung: 14.03.2012
(73) Patentinhaber: Reformwerke Bauer & Co. Gesellschaft m.b.H., 4600 Wels (AT)
(72) Erfinder: Gattermair, Gerhard, 4710 Schlüsselberg (AT)
(74) Vertreter: Puchberger & Partner Patentanwälte

(56) Entgegenhaltungen:
- EP-A2- 1 547 840
- DE-A1- 4 204 384
- DE-A1- 10 011 343
- DE-A1-102005 044 179
- US-A1- 2002 183 155

## Beschreibung

Die Erfindung bezieht sich auf einen Antriebsstrang für Fahrzeuge mit Zapfwellen für den Antrieb von Zusatzgeräten, wobei die Zapfwellenantriebswelle koaxial durch die als Hohlwelle ausgebildete Antriebswelle für den Fahrbetrieb geführt ist, wobei an der durchgehenden Zapfwellenantriebswelle für einen ersten Zapfwellenantrieb ein Antriebsritzel für ein erstes Zusatzaggregat und an der Hohlwelle für den Fahrantrieb ein zweites Zahnritzel für den Antrieb eines zweiten Zusatzaggregates vorgesehen ist.

In DE 19748423 A1 ist eine Ausbildung offenbart, bei welcher zum Antrieb eines Nebenaggregates an einer durch eine Hohlwelle geführten Antriebswelle ein Antriebsritzel vorgesehen ist, das mit einem mit dem Nebenaggregat verbundenen Zahnrad kämmt. Die Hohlwelle dient der Kraftübertragung vom Antriebsmotor zum Fahrwerk. Die Hohlwelle endet vor dem Antriebsritzel an der koaxial in der Hohlwelle geführten Antriebswelle, wobei am Ende der Hohlwelle ein Vorgelege für die Kraftübertragung an die Abtriebswelle des Getriebes für den Antrieb des Fahrwerkes vorgesehen ist. Mit einer solchen Anmeldung ist es nicht möglich, zusätzlich Zapfwellen zu betreiben, die für den Antrieb von zusätzlichen Geräten wie Schneefräsen, Mähwerke u.dgl. dienen.Aus dem gattungsbildenden Dokument EP 1 547 840 A2 geht ein Antriebsstrang für Fahrzeuge mit Zapfwellen für den Antrieb von Zusatzgeräten hervor, wobei die Zapfwellenantriebswelle koaxial durch die als Hohlwelle ausgebildete Antriebswelle für den Fahrantrieb geführt ist. Dabei sind die Zusatzaggregate an den Enden der Zapfwellen anzuschließen.

Eine analoge Ausbildung ist aus der DE 10 2005 044 179 A1 entnehmbar, wobei auch bei dieser Ausbildung mechanische Zusatzgeräte nur an den Enden der Zapfwellen angeschlossen werden können.

Der Erfindung liegt die Aufgabe zugrunde, bei einem Fahrzeug der eingangs genannten Art die Antriebsstrang so zu modifizieren, dass bei solchen Fahrzeugen, nämlich vor allem Mehrzweckfahrzeuge bzw. Kommunalfahrzeuge, zusätzlich zu den an den Zapfwellen anzutreibenden Geräten noch Zusatzaggregate für den Fahrzeugantrieb bzw. den Zapfwellenantrieb angetrieben werden können.

Erfindungsgemäß wird diese Aufgabe dadurch gelöst, dass die Hohlwelle quer zur Längsachse geteilt ist, wobei die beiden koaxial hintereinander angeordneten Teile über ein Vorgelege kraftmäßig verbunden sind und wobei zwischen den beiden Teilen an der durchgehenden Zapfwelle das erste Antriebsritzel angeordnet ist. Dadurch ist es möglich, unabhängig davon, ob ein Zusatzgerät an der Zapfwellenkupplung angeschlossen ist, Zusatzaggregate zu betreiben. Außerdem wird eine platzmäßig günstige Anordnung des Antriebsritzels erzielt.

Vorteilhafterweise kann an der durchgehenden Zapfwellenantriebswelle ein weiteres Antriebsritzel, vorzugsweise zwischen einer weiteren Teilung der Hohlwelle, für einen zweiten Zapfwellenantrieb vorgesehen sein. Damit ist der Betrieb zweier Zapfwellen, üblicherweise eine an der Front des Fahrzeuges vorgesehenen zweiten Zapfwelle und einer an Heck des Fahrzeuges vorgesehenen Zapfwelle, möglich.

Um das Fahrzeug auch als Hybridfahrzeug betätigen zu können, können als Zusatzaggregate Motorgeneratoren vorgesehen sein, welche mit einer Speicherbatterie verbunden sind. Damit wird bei herkömmlichem Fahrbetrieb mittels des Verbrennungsmotors über die Motorgeneratoren die Speicherbatterie geladen, wobei bei Bedarf die Motorgeneratoren als zusätzliche Antriebsquelle zugeschaltet bzw. als alleiniger Fahrzeugantrieb eingesetzt werden können.

Alternativ dazu kann als Zusatzaggregat an der Antriebswelle für den Fahrbetrieb eine Wirbelstrombremse, ein Hydraulikmotor oder dergleichen vorgesehen sein, wodurch der Fahrbetrieb zusätzlich zu den herkömmlichen Steuerelementen noch über eine weitere Bremse oder einen weiteren Motor geregelt werden kann.

Schließlich kann die Wirbelstrombremse oder der Hydraulikmotor zusätzlich zu dem als Motorgenerator ausgebildeten Zusatzaggregat über das Antriebsritzel mit der als Hohlwelle ausgebildeten Antriebswelle für den Fahrantrieb verbunden sein, womit ein kombinatorischer Betrieb der Zusatzaggregate für die Erzielung der gewünschten Fahreigenschaften ermöglicht ist.

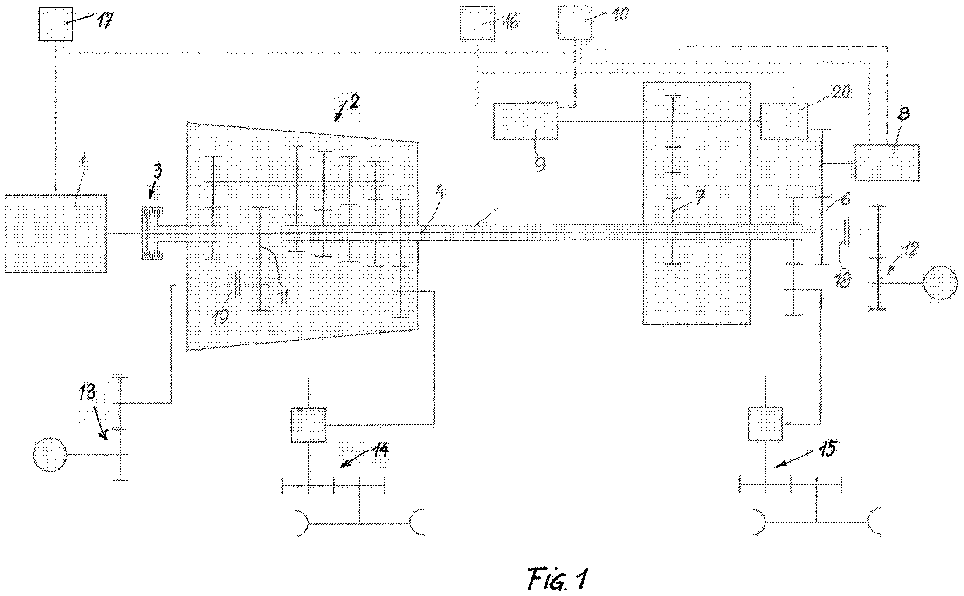

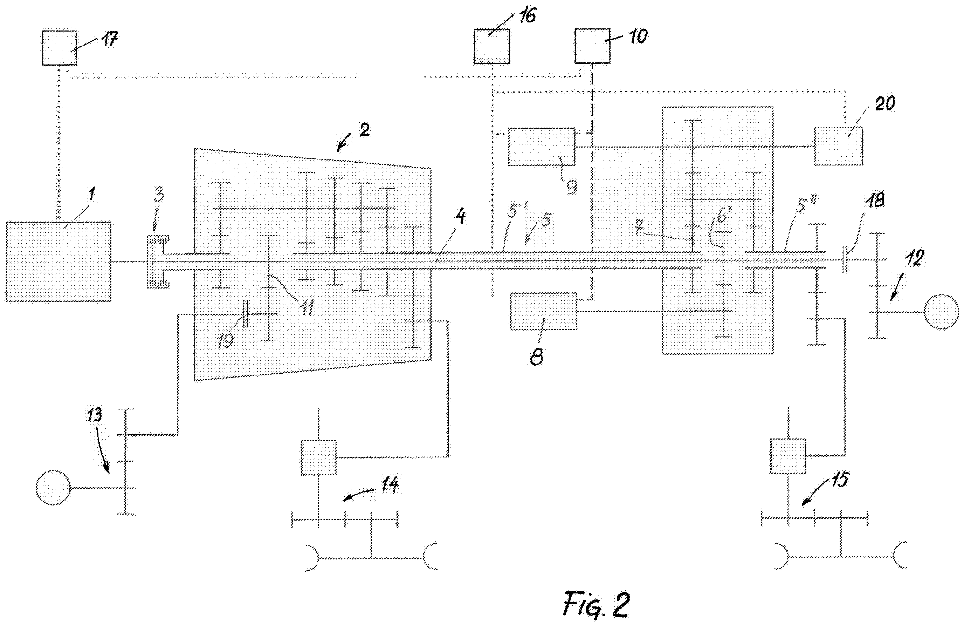

In der Zeichnung sind Ausführungsbeispiele des Erfindungsgegenstandes schematisch dargestellt. Figur 1 zeigt schematisch den Antriebsstrang einer ersten Ausführungsform und Figur 2 eine analoge Ansicht mit einem geänderten Antriebsstrang.

Beide Ausführungsvarianten stimmen im Wesentlichen überein, lediglich die Anordnung des Zahnritzels an der Zapfwellenantriebswelle ist abgewandelt. Daher scheinen in beiden Figuren für gleiche Teile die gleichen Bezugszeichen auf, lediglich die abgeänderten Bauteile sind mit geänderten Bezugszeichen versehen.

Bei dem erfindungsgemäßen Antriebsstrang ist mit 1 der Antriebsmotor des Fahrzeuges bezeichnet, welcher ein Wechselgetriebe 2 über eine Kupplung 3 antreibt. Diese Kupplung ist eine Doppelkupplung und kann damit die Zapfwellenantriebswelle 4 und die über das Fahrzeugwechselgetriebe 2 angetriebene Antriebswelle 5 für den Fahrantrieb gesondert kuppeln.

An der Zapfwellenantriebswelle 4 ist am Ende der als Hohlwelle ausgebildeten Antriebswelle 5 für den Fahrantrieb ein Zahnritzel 6 angeordnet, mittels welchem ein Zusatzaggregat 8 angetrieben werden kann. Dieses Zusatzaggregat 8 ist in der Regel ein Motorgenerator, welcher bei herkömmlichem Betrieb der Zapfwellenantriebswelle 4 Strom in eine Speicherbatterie 10 liefert. In diese Speicherbatterie 10 ist über ein an der Antriebswelle 5 für den Fahrantrieb vorgesehenes Ritzel 7 und einem Motorgenerator 9 ebenfalls Strom an die Batterie einspeisbar. Dadurch ist es möglich, das Fahrzeug als Hybridfahrzeug einzusetzen. Wenn also erforderlich sein sollte, das Fahrzeug bzw. die Zapfwelle über den Elektromotor anzutreiben, dann kann aus der Speicherbatterie die erforderliche Strommenge abgenommen werden.

An der Zapfwellenantriebswelle 4 ist im Bereich des Wechselgetriebes 2 ein weiteres Zahnritzel vorgesehen, mittels welchem eine weitere Zapfwelle antreibbar ist. Die am Heck des Fahrzeuges vorgesehene Zapfwelle ist mit 12 bezeichnet und die an der Front desselben angebrachte weitere Zapfwelle mit 13. Beide Zapfwellen sind über je eine Kupplung 18 bzw. 19 vom Antrieb trennbar. Mit 14 und 15 sind die Antriebsachsen bezeichnet, welche über Zahnradgetriebe mit der Antriebswelle 5 für den Fahrantrieb
gekoppelt sind. Diese Antriebe sind herkömmlich und werden daher hier nicht im Detail beschrieben.

Die beiden Motorgeneratoren 8, 9 sind über strichpunktierte Leitungen sowohl mit der Speicherbatterie 10 als auch mit Steuergeräten 16, 17 verbunden, wobei das Steuergerät 16 zur Steuerung des Hybridantriebes und die Steuerung 17 zur Steuerung des Verbrennungsmotors dient.

In einer nicht dargestellten Ausführungsvariante kann anstelle des Motorgenerators 9, der über das Antriebsritzel 7 mit der Antriebswelle 5 für den Fahrantrieb gekoppelt ist, eine Wirbelstrombremse oder ein Hydraulikmotor angeschlossen sein. Durch den Hydraulikmotor ist eine sehr gut steuerbare Vorwärtsbewegung des Fahrzeuges erzielbar, was insbesondere bei Arbeitsvorgängen entlang einer Straße oder dergleichen vorteilhaft ist, z.B. bei einem Mähvorgang am Straßenbankett oder dergleichen. Die Wirbelstrombremse ist dafür einsetzbar, dass bei Bergabfahrten eine zusätzliche Bremswirkungen und damit auch eine bessere Steuerung einer Bremsung beim abwärts Fahren erreicht ist.

Um eine kombinatorische Verwendung von Hydraulikmotor oder Wirbelstrombremse mit dem an der Antriebswelle 5 für den Fahrantrieb vorgesehenen Motorgenerator (9) zu ermöglichen, ist ein weiteres durch den Hydromotor oder die Wirbelstrombremse gebildetes Zusatzaggregat (20) an das Ritzel (7) angeschlossen

Beim Ausführungsbeispiel gemäß Figur 2 ist das Antriebsritzel an der Zapfwellenantriebswelle 4 mit einer kompakten Bauweise zwischen zwei Wellenstücke 5' und 5" der Antriebswelle 5 für den Fahrantrieb vorgesehen. Dieses Antriebsritzel an der Zapfwellenantriebswelle 4 ist mit 6' bezeichnet und betreibt gemäß Figur 2 ebenfalls wieder einen Motorgenerator 8. Die Funktion ist identisch mit jener gemäß Figur 1 jedoch ist hier platzmäßig eine günstigere Variante erreicht.

## Patentansprüche

1. Antriebsstrang für Fahrzeuge mit Zapfwellen für den Antrieb von Zusatzgeräten, wobei die Zapfwellenantriebswelle koaxial durch die als Hohlwelle ausgebildete Antriebswelle für den Fahrantrieb geführt ist, wobei an der durchgehenden Zapfwellenantriebswelle (4) für einen ersten Zapfwellenantrieb ein Antriebsritzel (6, 6') für ein erstes Zusatzaggregat (8) und an der Hohlwelle (5) für den Fahrantrieb ein zweites Antriebsritzel (7) für den Antrieb eines zweiten Zusatzaggregates (9) vorgesehen ist, **dadurch gekennzeichnet, dass** die Hohlwelle (5) quer zur Längsachse geteilt ist, wobei die beiden koaxial hintereinander angeordneten Teile (5', 5") über ein Vorgelege kraftmäßig verbunden sind und wobei zwischen den beiden Teilen (5', 5") an der durchgehenden Zapfwellenantriebswelle (4) das erste Antriebsritzel (6') angeordnet ist.

2. Antriebsstrang nach Anspruch 1, **dadurch gekennzeichnet, dass** an der durchgehenden Zapfwellenantriebswelle (4) ein weiteres Antriebsritzel (11), vorzugsweise zwischen einer weiteren Teilung der Hohlwelle (5), für einen zweiten Zapfwellenantrieb vorgesehen ist.

3. Antriebsstrang nach Anspruch 1 oder 2, **dadurch gekennzeichnet, dass** als Zusatzaggregate (8, 9) Motorgeneratoren vorgesehen sind, welche mit einer Speicherbatterie (10) verbunden sind.

4. Antriebsstrang nach einem der Ansprüche 1 bis 3, **dadurch gekennzeichnet, dass** als Zusatzaggregat (9) an der Antriebswelle für den Fahrbetrieb eine Wirbelstrombremse, ein Hydraulikmotor oder dergleichen (20) vorgesehen ist.

5. Antriebsstrang nach Anspruch 4, **dadurch gekennzeichnet, dass** die Wirbelstrombremse oder der Hydraulikmotor (20) zusätzlich zu dem als Motorgenerator ausgebildeten Zusatzaggregat (9) über das Antriebsritzel (7) mit der als Hohlwelle (5) ausgebildeten Antriebswelle für den Fahrantrieb verbunden sind.

## Claims

1. A drive train for vehicles having power take-off shafts for driving attachments, the power take-off drive shaft being guided coaxially through the drive shaft, which is in the form of a hollow shaft, for the travel drive, a drive pinion (6, 6') for a first additional unit (8) being provided on the continuous power take-off drive shaft (4) for a first power take-off drive, and a second drive pinion (7) for driving a second additional unit (9) being provided on the hollow shaft (5) for the travel drive, **characterised in that** the hollow shaft (5) is divided transversely to the longitudinal axis, wherein the two parts (5', 5"), which are arranged coaxially one behind the other, are connected in terms of force by means of an intermediate gear, and wherein the first drive pinion (6') is arranged on the continuous power take-off drive shaft (4) between the two parts (5' 5").

2. The drive train according to Claim 1, **characterised in that** a further drive pinion (11) is provided on the continuous power take-off drive shaft (4), preferably between a further division of the hollow shaft (5), for a second power take-off drive.

3. The drive train according to Claim 1 or 2, **characterised in that** motor generators that are connected to a storage battery (10) are provided as additional units (8, 9).

4. The drive train according to any one of Claims 1 to 3, **characterised in that** an eddy current brake, a hydraulic motor or the like (20) is provided as an additional unit (9) on the drive shaft for the travel drive.

5. The drive train according to Claim 4, **characterised in that** the eddy current brake or the hydraulic motor (20) is connected to the drive shaft in the form of a hollow shaft (5) for the travel drive via the drive pinion (7) in addition to the additional unit (9) in the form of a motor generator.

## Revendications

1. Chaîne cinématique de propulsion pour véhicules avec des arbres de prise de force pour l'entraînement d'appareils supplémentaires, l'arbre de transmission d'arbre de prise de force étant coaxialement guidé par l'arbre de transmission constitué comme arbre creux pour le système de propulsion, un pignon d'entraînement (6, 6') pour un premier groupe supplémentaire (8) étant prévu pour un premier entraînement de prise de force sur l'arbre de transmission de prise de force (4) et un deuxième pignon d'entraînement (7) étant prévu sur l'arbre creux (5) pour le système de propulsion pour l'entraînement d'un deuxième groupe supplémentaire (9), **caractérisée en ce que** l'arbre creux (5) est divisé transversalement à l'axe longitudinal, les deux parties (5', 5") disposées coaxialement l'une derrière l'autre étant reliées par conformité de force par le biais d'un réducteur et le premier pignon d'entraînement (6') étant disposé entre les deux parties (5', 5") sur l'arbre de transmission de prise de force continu (4).

2. Chaîne cinématique selon la revendication 1, **caractérisée en ce que** sur l'arbre de transmission de force continu (4) est prévu un autre pignon d'entraînement (11) de préférence entre une autre séparation de l'arbre creux (5) pour un deuxième entraînement de prise de force.

3. Chaîne cinématique de propulsion selon la revendication 1 ou 2, **caractérisée en ce que** des groupes générateurs sont prévus en tant que groupes supplémentaires (8, 9), lesquels sont reliés à un accumulateur (10).

4. Chaîne cinématique de propulsion selon l'une quelconque des revendications 1 à 3, **caractérisée en ce qu'**un frein à courants de Foucault, un moteur hydraulique ou des équipements analogues (20) sont prévus en tant que groupe supplémentaire (9) sur l'arbre de transmission pour le système de propulsion.

5. Chaîne cinématique de propulsion selon la revendication 4, **caractérisée en ce que** le frein à courants de Foucault ou le moteur hydraulique (20) sont reliés en plus du groupe supplémentaire (9) constitué comme groupe générateur par le biais du pignon d'entraînement (7) à la prise de force pour le système de propulsion, constituée comme arbre creux (5).
